# EUROPEAN PATENT SPECIFICATION

(11) **EP 2 526 629 B1**
(45) Date of publication and mention of the grant of the patent: **04.05.2016**
(21) Application number: 11700173.5
(22) Date of filing: 13.01.2011
(51) Int. Cl.: H04B 1/707, H04L 25/02, H04L 27/26, H04L 5/00, H04W 52/02

(54) **MICRO-SLEEP TECHNIQUES IN LTE RECEIVERS**
MIKROCHLAFTECHNIKEN IN LTE-EMPFÄNGERN
TECHNIQUES DE MICRO-SOMMEIL DANS LES RÉCEPTEURS LTE

(30) Priority: 08.03.2010 US 719359; 21.01.2010 US 296977 P
(43) Date of publication of application: 28.11.2012
(73) Proprietor: Telefonaktiebolaget LM Ericsson (publ), 164 83 Stockholm (SE)
(72) Inventor: BERNHARDSSON, Bo, S-224 75 Lund (SE); LINDOFF, Bengt, S-237 35 Bjärred (SE)
(74) Representative: Ericsson
(86) International application number: PCT/EP2011/050383
(87) International publication number: WO 2011/089056

(56) References cited:
- WO-A2-2009/002249
- US-A1- 2004 014 505
- US-A1- 2008 051 046
- US-A1- 2008 159 439

## Description

### TECHNICAL FIELD

The present invention generally relates to wireless communication receivers, and more particularly relates to techniques for reducing power consumption in wireless receivers by selectively deactivating receiver circuits during operation.

### BACKGROUND

In a wireless packet-switched data network employing Orthogonal Frequency Division Multiplexing (OFDM), modulated symbols are constructed from a data packet and inserted into a rectangular grid of symbols in the time-frequency domain. In the so-called Long-Term Evolution (LTE) wireless systems developed by members of the 3^{rd}-Generation Partnership Project, this rectangular grid is divided into "resource blocks," such that each resource block includes consecutive sub-carriers in the frequency domain and consecutive OFDM symbols in the time domain. An LTE resource block includes twelve consecutive sub-carriers in the frequency domain and a "slot" of seven consecutive OFDM symbols in the time domain (in the normal case; an LTE transmitter can be configured to use only six OFDM symbols in a resource block to combat large delay spreads). Each element (called "resource element" in LTE) of the resource block represents a basic unit in which a complex-valued symbol can be transmitted.

To coherently demodulate the symbols included in these resource blocks, an OFDM receiver must estimate the channel over which the resource blocks are transmitted. To facilitate this estimation, known reference symbols, commonly referred to as pilot symbols, are transmitted in each resource block. In LTE, these reference symbols are jointly referred to as reference signals, and three different types of reference signals are defined. First, common reference signals, or "cell-specific" downlink reference signals, are transmitted in every downlink resource block, and thus span the entire downlink bandwidth for the cell. These can be used by an receiver to estimate the channel. In some cases, an additional reference signal, known in LTE as a "UE-specific" reference signal, is dedicated to a particular user for certain transmission modes, such that only the targeted receiver can process the reference symbols. When these dedicated reference symbols are used, the same transmission methods (*e.g*., multi-antenna precoding) used for the data symbols are also used for the known reference symbols. A third type of reference signal, the MBSFN reference signal, is used for transmissions in accordance with the 3GPP specifications for Multi-Media Broadcast over a Single Frequency Network (MBSFN).

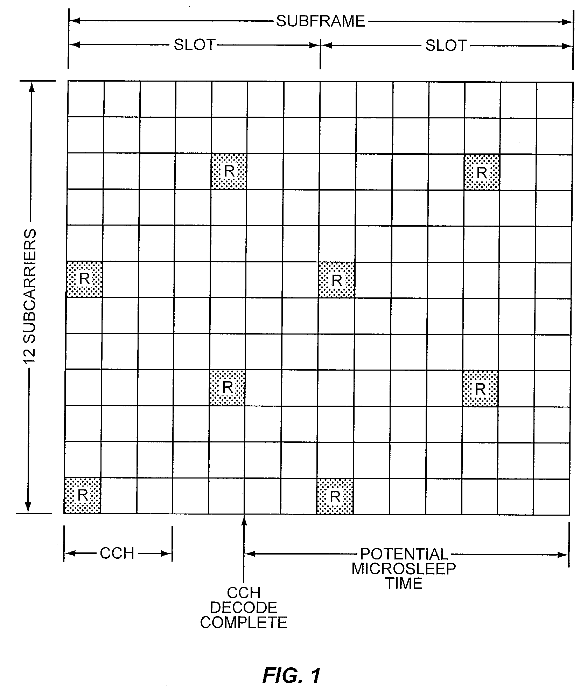

The response of the wireless channel in an OFDM system is a slow-varying, two-dimensional function of time and frequency. Accordingly, reference symbols need not be placed in every subcarrier nor in every OFDM symbol interval. Instead, reference symbols are distributed across each resource block (an exemplary arrangement is illustrated in Figure 1), and the wireless receiver interpolates and/or extrapolates the channel response from the resource elements carrying reference symbols to obtain estimates for the remaining resource elements in the resource block. Wireless receivers also have some degree of flexibility in which reference symbols are used to estimate the channel response for a given resource block or resource element. In addition to the reference symbols transmitted in the resource block of interest, a receiver might use reference symbols in frequency-adjacent resource blocks and/or in all or part of one or more time slots prior to the resource block of interest.

Published patent application US 2008/0159439 A1 discloses a terminal, for use in a wireless communication network, the terminal includes a radio frequency (RF) receiver and a digital processing circuit which processes digital samples so as to identify the time allocation while shutting down the RF receiver during at least one interval during the downlink frame that is outside the identified time allocation.

Published patent application US 2004/0014505 A1 discloses a mobile communication station, where a signal received by the mobile communication station in standby mode is sampled.

### SUMMARY

According to various embodiments of the methods and apparatus disclosed herein, a "micro-sleep" functionality is selectively enabled in a wireless receiver, based on an evaluation of channel conditions, traffic characteristics, or both. When micro-sleep operation is appropriate, such as when an estimated signal-to-interference ratio is higher than a pre-determined threshold, one or more receiver circuits in a mobile station can be de-activated for a portion of a sub-frame (or other transmission-time interval) that generally carries traffic data but is not currently carrying data targeted to the mobile station. In this manner, significant power savings can be achieved, independently of or in addition to any power savings provided by existing discontinuous-receive (DRX) technologies.

In an exemplary embodiment of a method of controlling a wireless receiver, a receiver circuit is activated for a first portion of a first transmit-time interval, the first portion comprising control channel data and one or more first reference symbols. In an LTE system, for example, this first portion may comprise the control channel portion of an LTE downlink subframe, *i.e.*, the first one, two, or three OFDM slots of the subframe. The exemplary method further comprises evaluating a channel condition, a data-traffic characteristic, or both, and selectively de-activating the receiver circuit for a second portion of the first transmit-time interval, based on said evaluating.

In some embodiments, one or more channel conditions are evaluated against pre-determined criteria. In these embodiments, then, evaluating a channel condition may comprise estimating a channel condition based on the first reference symbols and comparing the estimated channel condition to a suitable pre-determined threshold (where the threshold level in any particular case depends on the channel condition being evaluated). The estimated channel condition may be, for example, an estimated signal-to-noise ratio, in which case the receiver circuit is selectively de-activated if the estimated signal-to-noise ratio exceeds a corresponding pre-determined threshold. In other embodiments, the estimated channel condition is an estimated delay spread and the receiver circuit is selectively de-activated for the second portion of the transmit-time interval if the estimated delay spread is less than a suitable pre-determined threshold. In still others, the estimated channel condition is an estimated Doppler spread, and the receiver circuit is selectively de-activated if the estimated Doppler spread exceeds a different pre-determined threshold.

In still other embodiments, the selective de-activation of the receiver circuit is based, at least in part, on evaluating a data-traffic characteristic. In some of these embodiments, evaluating the data traffic characteristic comprises determining a current type of service, and may further comprise estimating a required data speed for the current type of service, such that selectively de-activating the receiver circuit comprises de-activating the receiver circuit if the estimated required data speed is less than a pre-determined threshold level for the estimated required data speed.

The above-summarized methods, and variations thereof, may be implemented in a wireless receiver, including wireless receivers configured for operation in LTE networks. An exemplary wireless receiver thus comprises a receiver circuit that is configured to be selectively disabled and a control circuit, wherein the control circuit is coupled to the receiver circuit and is configured to activate the receiver circuit for a first portion of a first transmit-time interval, the first portion comprising control channel data and one or more first reference symbols, to evaluate a channel condition, a data-traffic characteristic, or both, and to selectively de-activate the receiver circuit for a second portion of the first transmit-time interval, based on said evaluating. As with the various embodiments of the methods summarized above, in some embodiments of this wireless receiver, the first transmit-time interval comprises an LTE subframe, and the first portion of the LTE subframe comprises at least the first OFDM symbol of the LTE subframe.

In some embodiments, the control circuit is configured to evaluate one or more channel conditions against pre-determined criteria. In these embodiments, the control circuit is configured to evaluate a channel condition by estimating the channel condition based on the first reference symbols and comparing the estimated channel condition to a suitable pre-determined threshold level for the channel condition. In some of these embodiments the estimated channel condition is an estimated signal-to-noise ratio, and the control circuit is configured to selectively de-activate the receiver circuit if the estimated signal-to-noise ratio exceeds a suitable pre-determined threshold level for signal-to-noise ratio. In others, the estimated channel condition is an estimated delay spread and the control circuit is configured to selectively de-activate the receiver circuit if the estimated delay spread is less than a corresponding pre-determined threshold. In still others, the estimated channel condition is an estimated Doppler spread and the control circuit is configured to selectively de-activate the receiver circuit if the estimated Doppler spread exceeds a pre-determined threshold level for Doppler spread. Selective de-activation based on a combination of these and/or other factors is also possible, in some embodiments, as is selective de-activation based on evaluation of a data-traffic characteristic, such as a current type of service, and/or a required data speed for the current type of service.

Of course, the present invention is not limited to the above features and advantages. Those skilled in the art will recognize additional features and advantages upon reading the following detailed description, and upon viewing the accompanying drawings.

### BRIEF DESCRIPTION OF THE DRAWINGS

Figure 1 illustrates the mapping of reference symbols to a resource grid in an LTE system, as well as the potential time interval for micro-sleep.
Figure 2 is a block diagram of an exemplary wireless device according to some embodiments of the present invention.
Figure 3 is a process flow diagram illustrating an exemplary method for controlling a wireless receiver.
Figure 4 is a process flow diagram illustrating details of evaluating channel conditions and selectively de-activating a receiver circuit, according to some embodiments of the present invention.

### DETAILED DESCRIPTION

Although the following techniques are generally described in the context of a Long Term Evolution (LTE) wireless system, as specified by the 3^{rd}-Generation Partnership Project (3GPP), those skilled in the art will appreciate that these techniques may be readily adapted to other wireless standards and systems in which reference symbols are distributed across time and/or frequency resources. Thus, the description of various details of the present invention in the context of LTE should be viewed as illustrative, and not limiting.

Figure 1 illustrates an exemplary signal configuration for downlink (base-station-to-mobile) transmissions, which can be viewed as occupying a rectangular grid of time-frequency resources. Each resource block comprises twelve contiguous subcarriers (pictured in the vertical dimension in Figure 1) and seven OFDM symbols (pictured in the horizontal dimension in Figure 1.) Each resource block corresponds to a single 0.5-millisecond slot; two contiguous slots form an LTE subframe. The downlink control channel (CCH), which includes scheduling information for the receiving mobile devices, is transmitted using the first one, two, or three OFDM symbols of each 1-millisecond subframe. In the pictured resource grid, the CCH occupies the first three OFDM symbols of the sub-frame. Traffic data is transmitted in the remaining OFDM symbols. Those familiar with the LTE specifications will appreciate that Figure 1 and the description herein applies to cells using the normal cyclic prefix length - in cells using extended cyclic prefixes, each subframe has only twelve OFDM symbols.

Reference symbols are transmitted in the first and fifth OFDM symbols of each slot (one-half of a subframe) - thus, OFDM symbol numbers 0,4,7 and 11 in each subframe contain reference symbols, denoted with an "R" in Figure 1. In a typical receiver of a mobile station ("user equipment" or "UE" in 3GPP terminology), demodulating and decoding the CCH might take from two to four symbol time periods after the CCH symbols are received. Thus, the mobile station generally will have finished demodulating the CCH and will know whether it is scheduled to receive traffic data in the current subframe by the end of the first slot. If data traffic is scheduled for the mobile station, the receiver demodulates and decodes the remainder of the subframe - in that process, the reference symbols appearing in the traffic data portion of the sub-frame are collected and incorporated into the ongoing channel estimation processes.

However, if no data is to be received by the terminal for that subframe, then there is a potential for portions of the receiver, such as one or more analog radio components, to be turned off, to save power, albeit for a short interval. This use of very short sleep intervals is hereinafter called "micro-sleep". As suggested by the example of Figure 1, where the potential micro-sleep interval extends over an entire slot, the use of micro-sleep techniques as described herein has a significant potential for reducing mobile station power consumption.

The use of micro-sleep techniques is independent of the use of conventional Discontinuous Reception mode (DRX), and thus provides power-savings potential even in scenarios where DRX functionality (in the network) is not used, or in scenarios where DRX is not used very effectively. Indeed, those skilled in the art will appreciate that there are significant differences between the micro-sleep techniques described herein and conventional DRX techniques. One difference is the difference in timing: a conventional DRX cycle involves multiple frames or sub-frames, from as few as ten in some cases, to as many as 10,000 in extreme cases. The micro-sleep techniques described herein may be performed within a single subframe. Another difference is that conventional DRX require coordination between the transmitter and receiver nodes - this may be accomplished, for example, via shared assumptions about DRX cycle durations (e.g., as specified in a standards document or other specification), or via explicit signaling between the transmitter and receiver nodes, or via a combination of both. The micro-sleep techniques described herein, on the other hand, may be carried out by a receiver node autonomously.

The preceding discussion of the basic micro-sleep approach implicitly assumes that the demodulation and decoding of the CCH can be successfully carried out without the use of the reference symbols provided in OFDM symbols 4, 7, and 11 of the subframe of interest. In practical implementations of LTE, it has turned out that the ability to successfully decode CCH is often a critical point in an LTE system's planning. One reason for this is that the CCH does not use hybrid-automatic-repeat-request (HARQ) techniques, thus no retransmissions of the CCH are possible. As a result, the terminal needs to reliably decode the CCH in one pass, to avoid throughput loss. Good channel estimates are generally needed for reliable CCH decoding, thus reference/pilot symbols transmitted in the portion of the OFDM symbol that contains data (i.e., symbols 4,7 and 11) in the current subframe, the previous subframe, or even both, might be needed to produce channel estimates that are sufficiently accurate for CCH decoding. This may be the case even if no data was transmitted to the terminal in the previous slot.

If micro-sleep is used, however, then only a subset of the total reference symbols, *e.g*., the reference symbols transmitted in the CCH OFDM symbols, are systematically available for CCH channel estimation. Depending on the prevailing system conditions, this can lead to bad CCH performance, *i.e.*, unreliable demodulating of the CCH.

In the discussion that follows, several techniques for using micro-sleep without impairing receiver performance are presented. For example, by adaptively enabling the use of micro-sleep from subframe to subframe, based on the channel conditions, one or more traffic characteristics, or both, receiver performance may be maintained at a sufficiently high level. This is accomplished by using micro-sleep only when channel conditions and/or traffic characteristics permit. For instance, depending on the current channel conditions, the mobile station can determine whether the channel estimator needs reference symbols transmitted in the data portion of each LTE subframe for good CCH channel estimation. If not, then the mobile station can de-activate all or part of its receiver for the latter portion of each subframe that doesn't carry traffic data for the mobile station. Otherwise, the mobile station's receiver is kept active throughout each subframe (or at least through each subframe for which the CCH is demodulated) so that reference symbols in the traffic data portion of the subframe may be included in the channel estimation process.

In other words, the mobile station can determine, depending on the channel conditions, whether reliable CCH decoding is possible without the use of reference symbols transmitted in the data portion of the LTE subframes. If so, micro-sleep is enabled (for subframes in which no data is transmitted to the terminal). Otherwise, micro-sleep is disabled, so that the channel estimator has access to a larger set of reference symbols.

Channel condition information that may be used in determining whether micro-sleep should be enabled may include, for example, one or more of a current signal-to-interference ratio (SIR); delay spread, and Doppler spread. In some receivers, one or more traffic characteristics, such as a current type of data service, may be used to determine whether to enable micro-sleep or not. In various embodiments this traffic characteristic information may be used instead of, or in addition to, channel condition information.

For example, a mobile station according to some embodiments of the present invention may include control processing circuits configured to determine that channel conditions are sufficient to allow for micro-sleep by evaluating whether the current SIR is larger than a corresponding pre-determined threshold, or whether a current type of service has a low required data speed, such as for voice transmissions, or whether the delay spread is lower than a suitable threshold, *e.g*., when the channel is substantially flat in its frequency response, and/or whether the Doppler spread is larger than a threshold level for Doppler spread. Some embodiments may be configured to evaluate two or more of the above channel conditions or traffic characteristics, or similar conditions and characteristics.

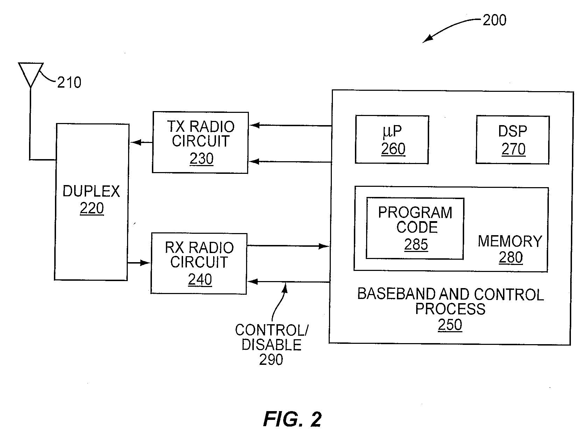

Figure 2 illustrates an exemplary embodiment of a wireless communication device 200, such as a mobile phone, wireless-enabled portable computer, or the like. Data can be exchanged both downstream (base station-to-device) and upstream (device-to-base station) over a communication channel established between the base station and the communication device 200, in accordance with one or more wireless communication standards or protocols, such as the standards for LTE promulgated by the 3GPP. As discussed above, a base station periodically transmits known reference symbols to the communication device 200 so that the device can estimate conditions of the channel; the channel estimate is used by the communication device 200 to coherently demodulate data symbols received from the base station.

In LTE systems, the modulated symbols are inserted into one or more resource blocks defining a rectangular area in the time-frequency domain, as shown in Figure 1. In other embodiments, the communication device 200 might be configured for operation in a WiMAX (worldwide interoperability for microwave access) network, which uses SOFDMA (scalable orthogonal frequency-division multiple access) as the underlying access technology. One of average skill in the art can readily extend the embodiments described herein to any access technology that allocates wireless resources as resource blocks in time, frequency and/or space, and thus the following embodiments and this description should thus be considered exemplary and non-limiting.

In more detail, the communication device 200 of Figure 2 comprises an antenna system 210 (which may include one or several physical antennas), coupled through duplexing device 220 to transmit (TX) radio circuit 230 and receive (RX) radio circuit 240. These circuits may comprise conventional components configured to receive and transmit signals configured according to the LTE specifications, including low-noise amplifies, power amplifiers, mixers, filters, A/D converters, D/A converters, and the like - the details of these circuits are well known to those familiar with radio design for digital wireless communication and are not necessary for a complete understanding of the present invention.

The communication device 200 further comprises a baseband & control processing circuit 250, which, in the exemplary embodiment of Figure 2, includes a microprocessor 260, a digital-signal processor (DSP) 270, and a memory circuit 280. The memory circuit 280 stores program code 285 for execution by microprocessor 260 and/or DSP 270, including program instructions for carrying out one or more of the micro-sleep techniques described herein. In various embodiments, a corresponding baseband & control processor circuit might control one or several microprocessors, microcontrollers, DSPs, or the like, and might be implemented as one or several application-specific integrated circuits (ASICs), *e.g*., with integrated memory and special-purpose digital logic, power supply hardware, and the like, or using several separate "off-the-shelf" components interconnected on a circuit board or in a specialized package such as a multi-chip module (MCM) or system-on-a-chip (SoC) package. Memory unit 280, although pictured as a single block in Figure 2, may comprise several types of memory, such as read-only memory (ROM), random-access memory (RAM), flash memory, magnetic storage devices, optical storage devices, and so on.

At least one element of RX radio circuit 240 may be de-activated (*i.e.*, powered off), under the control of baseband & control processing circuit 250, via control/disable interface 290.

(This interface may consist of a single digital input, in some embodiments, a single- or multiwire serial interface, in others, or a parallel interface in still others. Once more, those skilled in the art of radio design and control will be familiar with the details of such interfaces; these details are not necessary to a complete understanding of the present invention and are thus not included herein.) Thus, the overall power consumption of the device 200 may be improved by selectively disabling all or part of RX radio circuit 240, via control/disable interface 290, when circumstances permit. In particular, one or more elements of RX radio circuit 240 may be selectively de-activated for a portion of an LTE subframe (or other transmission-time interval, for another wireless protocol), based on a prevailing channel condition, traffic condition, or both.

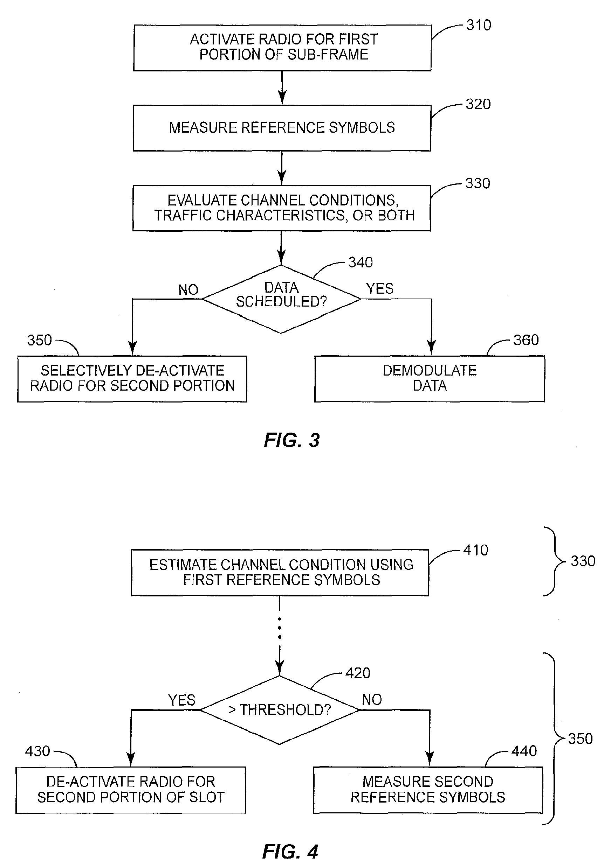

Figure 3 is a process flow illustrating an exemplary method of controlling a wireless receiver according to some embodiments of the present invention. The illustrated process flow, and variants thereof, may be implemented in the communication device of Figure 2 or in similar devices. In some embodiments, all or a part of the process flow of Figure 3 may be implemented using one or more processors executing software (in the form of program instructions stored in a computer-readable medium).

The process illustrated in Figure 3 "begins," as shown at block 310, with the activation of a mobile station's receiver circuit (*e.g*., all or part of RX radio circuit 240, in Figure 2). Those skilled in the art will appreciate that the illustrated process may be repeated for each of a series of subframes - thus, "activating" the radio circuit may sometimes simply mean that the radio circuit is left powered on from the previous interval, while at other times, "activating" the radio circuit may require powering up all or part of the receiver circuit just prior to the beginning of a subframe of interest. (Those skilled in the art will appreciate that the amount of time required to power up the radio circuits may vary depending on the type of component that is being activated. Some components, such as a phase-locked loop circuit, may require significant time to "settle" before they can be used, while others may be powered up nearly instantaneously.)

The radio circuit activation indicated at block 310 is for a "first portion" of a sub-frame, this first portion including control channel data and one or more first reference symbols. As discussed earlier, the control channel may include scheduling information indicating whether traffic data targeted to the mobile station is included in the current sub-frame. To demodulate and decode the control channel, an estimate of the current channel propagation conditions is needed - thus, the reference symbols in the first portion of the sub-frame are measured, as shown at block 320, and used to calculate a channel estimate. The channel estimate for a given resource block may be based, in some embodiments, on reference symbols from frequency-adjacent resource blocks and/or from time intervals immediately preceding the current sub-frame.

As shown at block 330, channel conditions, traffic characteristics, or both, are evaluated. As will be explained in further detail below, this evaluation will be used to determine whether or not micro-sleep should be utilized. Of course, a decision to use micro-sleep is unnecessary if traffic data for the mobile station is present in the current block. Accordingly, if data is scheduled (*e.g*., as determined at block 340 of Figure 3), then the radio circuit remains active and the data is demodulated, as shown at block 360. If no data is scheduled, on the other hand, then micro-sleep is an option, provided that the conditions permit. Thus, as shown at block 350, the radio circuit is selectively deactivated for a second portion of the sub-frame (*i.e*., a portion of the sub-frame that carries traffic data), depending on the evaluated channel conditions.

Figure 4 provides details of the evaluation and selective de-activation processes illustrated generally in Figure 3, as implemented in some embodiments of the invention. Those skilled in the art will appreciate that the order of particular steps in Figures 3 and 4 may vary. For instance, the evaluation of channel conditions may occur at various times and/or intervals, and need not necessarily be carried out at every sub-frame. However, for the purposes of illustrating the present techniques for embodiments that evaluate channel conditions, block 410 of Figure 4 may be viewed as corresponding to block 330 of Figure 3, while blocks 420, 430, and 440 of Figure 4 correspond to block 350 of Figure 3.

As shown at block 410, the evaluation of a channel condition may comprise the estimate (calculation) of a channel condition based on the reference symbols from the first portion of the sub-frame. (In some embodiments, this evaluation might occur before the sub-frame begins, and may thus be based on previous reference symbols. In others, the reference symbols from the first part of the sub-frame may be combined with prior symbols, *e.g*., using a filtering function, to estimate the channel condition.) The estimated channel condition might be, for instance, an estimate of the signal-to-interference ratio for the received signal. Techniques for estimating channel coefficients, signal-to-noise ratios, and other channel metrics, by comparing received reference symbols to known values for those symbols are well known to those skilled in the art and are not detailed here.

As shown at block 420, the estimated channel condition is compared to a pre-determined threshold (which may be, for example, a factory-configured parameter stored in the wireless device's memory). The particular threshold level used in a given embodiment will depend, of course, on the particular channel condition being evaluated. In the illustrated process, if the estimated channel condition is greater than the corresponding pre-determined threshold, then the receiver circuit is de-activated for a second portion of the sub-frame, as shown at block 430. Otherwise, the receiver circuit is left on, and reference symbols provided in the remainder of the sub-frame are measured and used for calculating channel estimates, as shown at block 440. Under these circumstances, the use of additional reference symbols in calculating the channel estimates will generally provide for improved estimates.

Those skilled in the art will appreciate that the "greater-than-threshold" evaluation shown in block 420 is appropriate for some channel conditions, but not for others. For instance, if the estimated signal-to-interference ratio (SIR) for the received signal is sufficiently high, then fewer reference symbols are needed to estimate the channel coefficients to an accuracy sufficient for reliably decoding the control channel. Thus, if the SIR is higher than a pre-determined threshold, micro-sleep can be enabled, and the reference signals in the remaining portion of the sub-frame ignored. Other channel conditions might also be subjected to a "greater-than-threshold" evaluation, alone or along with SIR. For instance, a Doppler spread for the received signal may be estimated. In some cases, the Doppler spread may be so high that additional reference symbols are unlikely to improve the accuracy of the channel coefficients symbols, since the channel is too rapidly changing. In such a case, micro-sleep may be enabled (and the receiver circuit disabled for part of the sub-frame) if the Doppler spread exceeds a pre-determined threshold.

Other channel conditions might be evaluated using a "less-than-threshold" evaluation. For instance, propagation channels having a relatively low delay spread, *i.e.*, having a relatively "flat" fading channel response, are more likely to be accurately characterized using relatively few reference symbols. Thus, an estimated delay spread can be compared to a pre-determined threshold, in some embodiments of the present invention - if the delay spread is less than the pre-determined threshold, then micro-sleep is enabled and the receiver circuit de-activated for a portion of the sub-frame.

Those skilled in the art will appreciate that traffic characteristics may also be used to determine when the selective de-activation of the receiver circuits is appropriate. For example, some types of service, such as voice-over-IP, may involve relatively low data rates and require relatively low signal-to-interference ratios (*e.g*., 3-4 dB) for successful reception of the encoded data. Furthermore, in some cases, the CCH may be more robustly encoded, so that reliably decoding the CCH is not an issue. In such a scenario, channel estimates might be regularly calculated based only on the reference symbols appearing in OFDM symbol 0 of the current subframe, for example, or based only on OFDM symbol 0 of the previous subframe. On the other hand, other traffic types may require much more accurate channel estimates, and thus require use of all the reference symbols from the preceding subframe, regardless of whether traffic data for the mobile was included in that previous subframe. Thus, in some embodiments of the invention, an evaluation of the traffic type may be used to determine whether micro-sleep should be enabled. For traffic types that require only minimal accuracy of channel estimates, reference symbols from the traffic portion of the preceding subframe may be safely ignored, and the receiver disabled (if no traffic data for the mobile is present). Otherwise, the receiver must remain enabled so that more reference symbols can be incorporated into the channel estimation process.

Those skilled in the art will appreciate that a good trade-off between CCH performance and power saving in an LTE mobile station may be achieved using variations of the techniques disclosed herein. Those skilled in the art will also appreciate that the inventive techniques disclosed herein are not limited to application in LTE mobile stations, but may be also applied to other devices and/or other wireless systems in which control channels and reference symbols are defined in similar ways. Finally, those skilled in the art will appreciate that the inventive techniques disclosed herein may be implemented by modifying conventional receiver circuits and receiver processing circuits, and that several embodiments may comprise one or more microprocessors, microcontrollers, or the like, configured with appropriate stored program instructions for carrying out the techniques discussed above.

Those skilled in the art will appreciate that terms such as "first", "second", and the like, as used herein, are generally used merely to distinguish between various elements, regions, sections, etc., and not necessarily to indicate a particular order or priority. As used herein, the terms "having", "containing", "including", "comprising" and the like are open ended terms that indicate the presence of stated elements or features, but do not preclude additional elements or features. The articles "a", "an" and "the" are intended to include the plural as well as the singular, unless the context clearly indicates otherwise. Like terms refer to like elements throughout the description.

With the above range of variations and applications in mind, it should be understood that the present invention is not limited by the foregoing description, nor is it limited by the accompanying drawings. Instead, the present invention is limited only by the following claims.

## Claims

1. A method of controlling a wireless receiver, the method comprising:
activating (310) a receiver circuit for a first portion of a first transmit-time interval, the first portion comprising control channel data and one or more first reference symbols;
evaluating (330; 410, 420) a channel condition, a data-traffic characteristic, or both;
determining (340) if data is scheduled or no data is scheduled to be received at the wireless receiver for a second portion of the first transmit-time interval; and
if determining no data is scheduled to be received, **characterized by**:
selectively (350; 430, 440) de-activating the receiver circuit for the second portion of the first transmit-time interval, based on said evaluating (330; 410, 420),
wherein said evaluating comprises comparing the channel condition and/or the data-traffic characteristic to pre-determined thresholds, and
wherein the selectively (350; 430) de-activating the receiver circuit for the second portion of the first transmit-time interval, comprises de-activating (430) the receiver or keeping the receiver circuit on (440) depending on the comparison; and
generating (350; 440), for the second portion of the first transmit-time interval when the receiver circuit is kept on, an improved estimate of the estimated channel condition using reference symbols available in the second portion of the first transmit-time interval.

2. The method of claim 1, wherein the first transmit-time interval comprises an LTE subframe, and wherein the first portion comprises at least the first OFDM symbol of the LTE subframe.

3. The method of claim 1, wherein evaluating a channel condition comprises estimating (410) a channel condition based on the first reference symbols and comparing (420) the estimated channel condition to a pre-determined threshold.

4. The method of claim 3, wherein the estimated channel condition is an estimated signal-to-noise ratio and wherein selectively de-activating the receiver circuit comprises de-activating (430) the receiver circuit if the estimated signal-to-noise ratio exceeds the pre-determined threshold.

5. The method of claim 3, wherein the estimated channel condition is an estimated delay spread and wherein selectively de-activating the receiver circuit comprises de-activating the receiver circuit if the estimated delay spread is less than the pre-determined threshold.

6. The method of claim 3, wherein the estimated channel condition is an estimated Doppler spread and wherein selectively de-activating the receiver circuit comprises de-activating the receiver circuit if the estimated Doppler spread exceeds the pre-determined threshold.

7. The method of claim 2, wherein the first portion and the second portion of the transmit-time interval are comprised within a single LTE subframe.

8. The method of claim 1, wherein evaluating a data-traffic characteristic comprises determining a current type of service.

9. The method of claim 8, wherein evaluating a data-traffic characteristic further comprises estimating a required data speed for the current type of service, and wherein selectively de-activating the receiver circuit comprises de-activating the receiver circuit if the estimated required data speed is less than a pre-determined threshold.

10. A wireless receiver, comprising a receiver circuit (240) that is configured to be selectively disabled and a control circuit, wherein the control circuit (250) is coupled to the receiver circuit (240) and configured to:
activate the receiver circuit for a first portion of a first transmit-time interval, the first portion comprising control channel data and one or more first reference symbols;
evaluate a channel condition, a data-traffic characteristic, or both;
determine if data is scheduled or no data is scheduled to be received at the wireless receiver for a second portion of the first transmit-time interval; and
**characterized by** the control circuit (250) being configured to if determination that no data is scheduled to be received:
selectively de-activate the receiver circuit for the second portion of the first transmit-time interval, based on said evaluating,
wherein the control circuit is configured to compare the channel condition and/or the data-traffic characteristic to pre-determined thresholds, and to de-activate (430) the receiver or keep the receiver circuit on (440) depending on the comparison; and
generate, for the second portion of the first transmit-time interval when the receiver circuit is kept on, an improved estimate of the estimated channel condition using reference symbols available in the second portion of the first transmit-time interval.

11. The wireless receiver of claim 10, wherein the first transmit-time interval comprises an LTE subframe, and wherein the first portion comprises at least the first OFDM symbol of the LTE subframe.

12. The wireless receiver of claim 10, wherein the control circuit is configured to evaluate the channel condition by estimating the channel condition based on the first reference symbols and comparing the estimated channel condition to a pre-determined threshold.

13. The wireless receiver of claim 12, wherein the estimated channel condition is an estimated signal-to-noise ratio and wherein the control circuit is configured to selectively de-activate the receiver circuit if the estimated signal-to-noise ratio exceeds the pre-determined threshold.

14. The wireless receiver of claim 12, wherein the estimated channel condition is an estimated delay spread and wherein the control circuit is configured to selectively de-activate the receiver circuit if the estimated delay spread is less than the pre-determined threshold.

15. The wireless receiver of claim 12, wherein the estimated channel condition is an estimated Doppler spread and wherein the control circuit is configured to selectively de-activate the receiver circuit if the estimated Doppler spread exceeds the pre-determined threshold.

16. The wireless receiver of claim 11, wherein the first portion and the second portion of the transmit-time interval are comprised within a single LTE subframe.

17. The wireless receiver of claim 10, wherein the control circuit is configured to evaluate a data-traffic characteristic by determining a current type of service.

18. The wireless receiver of claim 17, wherein the control circuit is further configured to estimate a required data speed for the current type of service, and to selectively de-activate the receiver circuit if the estimated required data speed is less than a pre-determined threshold.

19. A wireless communication device (200) for use in a wireless communication system, the wireless communication device comprising a wireless receiver according to any one of claims 10 to 18.

## Patentansprüche

1. Verfahren zur Steuerung eines drahtlosen Empfängers, wobei das Verfahren umfasst:
Aktivieren (310) einer Empfängerschaltung für einen ersten Abschnitt eines ersten Sendezeitintervalls, wobei der erste Abschnitt Steuerkanaldaten und ein oder mehrere erste Referenzsymbole umfasst;
Bewerten (330; 410, 420) einer Kanalbedingung, einer Datenverkehrscharakteristik oder beider;
Bestimmen (340), ob am drahtlosen Empfänger für einen zweiten Abschnitt des ersten Sendezeitintervalls Empfang von Daten geplant ist oder kein Empfang von Daten geplant ist; und
wenn bestimmt wird, dass kein Empfang von Daten geplant ist, **gekennzeichnet durch**:
selektives (350; 430, 440) Deaktivieren der Empfängerschaltung für den zweiten Abschnitt des ersten Sendezeitintervalls basierend auf dem Bewerten (330; 410, 420),
wobei das Bewerten ein Vergleichen der Kanalbedingung und/oder der Datenverkehrscharakteristik mit vorbestimmten Schwellen umfasst, und
wobei das selektive (350; 430) Deaktivieren der Empfängerschaltung für den zweiten Abschnitt des ersten Sendzeitintervalls in Abhängigkeit vom Vergleich ein Deaktivieren (430) des Empfängers oder Eingeschaltethalten (440) der Empfängerschaltung umfasst; und
Erzeugen (350; 440) für den zweiten Abschnitt des ersten Sendezeitintervalls, wenn die Empfängerschaltung eingeschaltet gehalten wird, einer verbesserten Schätzung der geschätzten Kanalbedingung unter Verwendung von Referenzsymbolen, die im zweiten Abschnitt des ersten Sendezeitintervalls verfügbar sind.

2. Verfahren nach Anspruch 1, wobei das erste Sendezeitintervall einen LTE-Unterrahmen umfasst, und wobei der erste Abschnitt wenigstens das erste OFDM-Symbol des LTE-Unterrahmens umfasst.

3. Verfahren nach Anspruch 1, wobei das Bewerten einer Kanalbedingung ein Schätzen (410) einer Kanalbedingung basierend auf den ersten Referenzsymbolen und Vergleichen (420) der geschätzten Kanalbedingung mit einer vorbestimmten Schwelle umfasst.

4. Verfahren nach Anspruch 3, wobei die geschätzte Kanalbedingung ein geschätztes Signal-Rausch-Verhältnis ist, und wobei das selektive Deaktivieren der Empfängerschaltung ein Deaktivieren (430) der Empfängerschaltung umfasst, wenn das geschätzte Signal-Rausch-Verhältnis die vorbestimmte Schwelle überschreitet.

5. Verfahren nach Anspruch 3, wobei die geschätzte Kanalbedingung eine geschätzte Laufzeitverbreiterung ist, und wobei das selektive Deaktivieren der Empfängerschaltung ein Deaktivieren der Empfängerschaltung umfasst, wenn die geschätzte Laufzeitverbreiterung kleiner als vorbestimmte Schwelle ist.

6. Verfahren nach Anspruch 3, wobei die geschätzte Kanalbedingung eine geschätzte Doppler-Verbreiterung ist, und wobei das selektive Deaktivieren der Empfängerschaltung ein Deaktivieren der Empfängerschaltung umfasst, wenn die geschätzte Doppler-Verbreiterung die vorbestimmte Schwelle überschreitet.

7. Verfahren nach Anspruch 2, wobei der erste Abschnitt und der zweite Abschnitt des Sendezeitintervalls innerhalb eines einzigen LTE-Unterrahmens enthalten sind.

8. Verfahren nach Anspruch 1, wobei das Bewerten einer Datenverkehrscharakteristik ein Bestimmen eines aktuellen Diensttyps umfasst.

9. Verfahren nach Anspruch 8, wobei das Bewerten einer Datenverkehrscharakteristik ferner ein Schätzen einer erforderlichen Datengeschwindigkeit für den aktuellen Diensttyp umfasst, und wobei das selektive Deaktivieren der Empfängerschaltung ein Deaktivieren der Empfängerschaltung umfasst, wenn die geschätzte erforderliche Datengeschwindigkeit niedriger als eine vorbestimmte Schwelle ist.

10. Drahtloser Empfänger, umfassend eine Empfängerschaltung (240), die so konfiguriert ist, dass sie selektiv deaktiviert wird, und eine Steuerschaltung, wobei die Steuerschaltung (250) mit der Empfängerschaltung (240) gekoppelt und konfiguriert ist zum:
Aktivieren der Empfängerschaltung für einen ersten Abschnitt eines ersten Sendezeitintervalls, wobei der erste Abschnitt Steuerkanaldaten und ein oder mehrere erste Referenzsymbole umfasst;
Bewerten einer Kanalbedingung, einer Datenverkehrscharakteristik oder beider;
Bestimmen, ob am drahtlosen Empfänger für einen zweiten Abschnitt des ersten Sendezeitintervalls Empfang von Daten geplant ist oder kein Empfang von Daten geplant ist; und
**dadurch gekennzeichnet, dass** die Steuerschaltung (250) ferner so konfiguriert ist, dass sie bei Bestimmung, dass kein Empfang von Daten geplant ist,
die Empfängerschaltung für den zweiten Abschnitt des ersten Sendezeitintervalls basierend auf dem Bewerten selektiv deaktiviert,
wobei die Steuerschaltung so konfiguriert ist, dass sie die Kanalbedingung und/oder die Datenverkehrscharakteristik mit vorbestimmten Schwellen vergleicht, und in Abhängigkeit vom Vergleich den Empfänger deaktiviert (430) oder die Empfängerschaltung eingeschaltet hält (440); und
für den zweiten Abschnitt des ersten Sendezeitintervalls, wenn die Empfängerschaltung eingeschaltet gehalten wird, eine verbesserte Schätzung der geschätzten Kanalbedingung unter Verwendung von Referenzsymbolen erzeugt, die im zweiten Abschnitt des ersten Sendezeitintervalls verfügbar sind.

11. Drahtloser Empfänger nach Anspruch 10, wobei das erste Sendezeitintervall einen LTE-Unterrahmen umfasst, und wobei der erste Abschnitt wenigstens das erste OFDM-Symbol des LTE-Unterrahmens umfasst.

12. Drahtloser Empfänger nach Anspruch 10, wobei die Steuerschaltung so konfiguriert ist, dass sie die Kanalbedingung durch Schätzen der Kanalbedingung basierend auf den ersten Referenzsymbolen und Vergleichen der geschätzten Kanalbedingung mit einer vorbestimmten Schwelle bewertet.

13. Drahtloser Empfänger nach Anspruch 12, wobei die geschätzte Kanalbedingung ein geschätztes Signal-Rausch-Verhältnis ist, und wobei die Steuerschaltung so konfiguriert ist, dass sie die Empfängerschaltung selektiv deaktiviert, wenn das geschätzte Signal-Rausch-Verhältnis die vorbestimmte Schwelle überschreitet.

14. Drahtloser Empfänger nach Anspruch 12, wobei die geschätzte Kanalbedingung eine geschätzte Laufzeitverbreiterung ist, und wobei die Steuerschaltung so konfiguriert ist, dass sie die Empfängerschaltung selektiv deaktiviert, wenn die geschätzte Laufzeitverbreiterung kleiner die vorbestimmte Schwelle ist.

15. Drahtloser Empfänger nach Anspruch 12, wobei die geschätzte Kanalbedingung eine geschätzte Doppler-Verbreiterung ist, und wobei die Steuerschaltung so konfiguriert ist, dass sie die Empfängerschaltung selektiv deaktiviert, wenn die geschätzte Doppler-Verbreiterung die vorbestimmte Schwelle überschreitet.

16. Drahtloser Empfänger nach Anspruch 11, wobei der erste Abschnitt und der zweite Abschnitt des Sendezeitintervalls innerhalb eines einzigen LTE-Unterrahmens enthalten sind.

17. Drahtloser Empfänger nach Anspruch 10, wobei die Steuerschaltung so konfiguriert ist, dass sie eine Datenverkehrscharakteristik durch Bestimmen eines aktuellen Diensttyps bewertet.

18. Drahtloser Empfänger nach Anspruch 17, wobei die Steuerschaltung ferner so konfiguriert ist, dass sie eine erforderliche Datengeschwindigkeit für den aktuellen Diensttyp schätzt und die Empfängerschaltung selektiv deaktiviert, wenn die geschätzte erforderliche Datengeschwindigkeit niedriger als eine vorbestimmte Schwelle ist.

19. Drahtlose Kommunikationsvorrichtung (200) zur Verwendung in einem drahtlosen Kommunikationssystem, wobei das drahtlose Kommunikationssystem einen drahtlosen Empfänger nach einem der Ansprüche 10 bis 18 umfasst.

## Revendications

1. Procédé de commande d'un récepteur sans fil, le procédé comprenant :
l'activation (310) d'un circuit de récepteur pour une première portion d'un premier intervalle de temps d'émission, la première portion comprenant des données de canal de commande et un ou plusieurs premiers symboles de référence ;
l'évaluation (330 ; 410, 420) d'une condition de canal et/ou d'une caractéristique de trafic de données ;
la détermination (340) s'il est ordonnancé ou non des données à recevoir au récepteur sans fil pour une deuxième portion du premier intervalle de temps d'émission ; et
s'il est déterminé qu'il n'est pas ordonnancé de données à recevoir, le procédé est **caractérisé par** :
la désactivation sélective (350 ; 430, 440) du circuit de récepteur pour la deuxième portion du premier intervalle de temps d'émission, sur la base de ladite évaluation (330 ; 410, 420), dans lequel ladite évaluation comprend la comparaison de la condition de canal et/ou de la caractéristique de trafic de données à des seuils prédéterminés, et
dans lequel la désactivation sélective (350 ; 430) du circuit de récepteur pour la deuxième portion du premier intervalle de temps d'émission comprend la désactivation (430) du récepteur ou le maintien du circuit de récepteur sous tension (440) en fonction de la comparaison ; et
la génération (350 ; 440), pour la deuxième portion du premier intervalle de temps d'émission, lorsque le circuit de récepteur est maintenu sous tension, d'une estimation améliorée de la condition de canal estimée en utilisant des symboles de référence disponibles dans la deuxième portion du premier intervalle de temps d'émission.

2. Procédé selon la revendication 1, dans lequel le premier intervalle de temps d'émission comprend une sous trame LTE, et dans lequel la première portion comprend au moins le premier symbole OFDM de la sous trame LTE.

3. Procédé selon la revendication 1, dans lequel l'évaluation d'une condition de canal comprend l'estimation (410) d'une condition de canal sur la base des premiers symboles de référence et la comparaison (420) de la condition de canal estimée à un seuil prédéterminé.

4. Procédé selon la revendication 3, dans lequel la condition de canal estimée est un rapport de signal sur bruit estimé et dans lequel la désactivation sélective du circuit de récepteur comprend la désactivation (430) du circuit de récepteur si le rapport de signal sur bruit estimé dépasse le seuil prédéterminé.

5. Procédé selon la revendication 3, dans lequel la condition de canal estimée est un étalement de délai estimé et dans lequel la désactivation sélective du circuit de récepteur comprend la désactivation du circuit de récepteur si l'étalement de délai estimé est inférieur au seuil prédéterminé.

6. Procédé selon la revendication 3, dans lequel la condition de canal estimée est un étalement de Doppler estimé et dans lequel la désactivation sélective du circuit de récepteur comprend la désactivation du circuit de récepteur si l'étalement de Doppler estimé dépasse le seuil prédéterminé.

7. Procédé selon la revendication 2, dans lequel la première portion et la deuxième portion de l'intervalle de temps d'émission sont comprises à l'intérieur d'une seule sous trame LTE.

8. Procédé selon la revendication 1, dans lequel l'évaluation d'une caractéristique de trafic de données comprend la détermination d'un type actuel de service.

9. Procédé selon la revendication 8, dans lequel l'évaluation d'une caractéristique de trafic de données comprend en outre l'estimation d'un débit de données nécessaire pour le type actuel de service, et dans lequel la désactivation sélective du circuit de récepteur comprend la désactivation du circuit de récepteur si le débit de données nécessaire estimé est inférieur à un seuil prédéterminé.

10. Récepteur sans fil, comprenant un circuit de récepteur (240) qui est configuré pour être sélectivement désactivé et un circuit de commande, dans lequel le circuit de commande (250) est couplé au circuit de récepteur (240) et est configuré pour effectuer :
l'activation du circuit de récepteur pour une première portion d'un premier intervalle de temps d'émission, la première portion comprenant des données de canal de commande et un ou plusieurs premiers symboles de référence ;
l'évaluation d'une condition de canal et/ou d'une caractéristique de trafic de données ;
la détermination s'il est ordonnancé ou non des données à recevoir au récepteur sans fil pour une deuxième portion du premier intervalle de temps d'émission ; et
**caractérisé en ce que** le circuit de commande (250) est configuré pour effectuer, s'il est déterminé qu'il n'est pas ordonnancé de données à recevoir :
la désactivation sélective du circuit de récepteur pour la deuxième portion du premier intervalle de temps d'émission, sur la base de ladite évaluation,
dans lequel le circuit de commande est configuré pour effectuer la comparaison de la condition de canal et/ou de la caractéristique de trafic de données à des seuils prédéterminés, et la désactivation (430) du récepteur ou le maintien du circuit de récepteur sous tension (440) en fonction de la comparaison ; et
la génération, pour la deuxième portion du premier intervalle de temps d'émission, lorsque le circuit de récepteur est maintenu sous tension, d'une estimation améliorée de la condition de canal estimée en utilisant des symboles de référence disponibles dans la deuxième portion du premier intervalle de temps d'émission.

11. Récepteur sans fil selon la revendication 10, dans lequel le premier intervalle de temps d'émission comprend une sous trame LTE, et dans lequel la première portion comprend au moins le premier symbole OFDM de la sous trame LTE.

12. Récepteur sans fil selon la revendication 10, dans lequel le circuit de commande est configuré pour effectuer l'évaluation de la condition de canal par l'estimation de la condition de canal sur la base des premiers symboles de référence et la comparaison de la condition de canal estimée à un seuil prédéterminé.

13. Récepteur sans fil selon la revendication 12, dans lequel la condition de canal estimée est un rapport de signal sur bruit estimé et dans lequel le circuit de commande est configuré pour effectuer la désactivation sélective du circuit de récepteur si le rapport de signal sur bruit estimé dépasse le seuil prédéterminé.

14. Récepteur sans fil selon la revendication 12, dans lequel la condition de canal estimée est un étalement de délai estimé et dans lequel le circuit de commande est configuré pour effectuer la désactivation sélective du circuit de récepteur si l'étalement de délai estimé est inférieur au seuil prédéterminé.

15. Récepteur sans fil selon la revendication 12, dans lequel la condition de canal estimée est un étalement de Doppler estimé et dans lequel le circuit de commande est configuré pour effectuer la désactivation sélective du circuit de récepteur si l'étalement de Doppler estimé dépasse le seuil prédéterminé.

16. Récepteur sans fil selon la revendication 11, dans lequel la première portion et la deuxième portion de l'intervalle de temps d'émission sont comprises à l'intérieur d'une seule sous trame LTE.

17. Récepteur sans fil selon la revendication 10, dans lequel le circuit de commande est configuré pour effectuer l'évaluation d'une caractéristique de trafic de données par la détermination d'un type actuel de service.

18. Récepteur sans fil selon la revendication 17, dans lequel le circuit de commande est en outre configuré pour effectuer l'estimation d'un débit de données nécessaire pour le type actuel de service, et la désactivation sélective du circuit de récepteur si le débit de données nécessaire estimé est inférieur à un seuil prédéterminé.

19. Dispositif de communication sans fil (200) destiné à être utilisé dans un système de communication sans fil, le dispositif de communication sans fil comprenant un récepteur sans fil selon l'une quelconque des revendications 10 à 18.
